(19) Europäisches Patentamt / European Patent Office / Office européen des brevets

(11) **EP 3 826 518 B1**

(12) **EUROPÄISCHE PATENTSCHRIFT**

(45) Veröffentlichungstag und Bekanntmachung des Hinweises auf die Patenterteilung:
**14.08.2024 Patentblatt 2024/33**

(21) Anmeldenummer: **19737116.4**

(22) Anmeldetag: **10.07.2019**

(51) Internationale Patentklassifikation (IPC):
**A47J 36/02** (2006.01)   **C09D 127/18** (2006.01)
**C09D 179/08** (2006.01)   **C09D 181/06** (2006.01)
**C08L 27/18** (2006.01)

(52) Gemeinsame Patentklassifikation (CPC):
(C-Sets verfügbar)
**C09D 127/18; C08G 73/14; C09D 179/08;**
C08L 2205/025                                    (Forts.)

(86) Internationale Anmeldenummer:
**PCT/EP2019/068631**

(87) Internationale Veröffentlichungsnummer:
**WO 2020/011897 (16.01.2020 Gazette 2020/03)**

(54) **ANTIHAFTBESCHICHTUNG UND VERFAHREN ZU DEREN HERSTELLUNG**

NON-STICK COATING

REVÊTEMENT ANTIADHÉSIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2018 EP 18182807**

(43) Veröffentlichungstag der Anmeldung:
**02.06.2021 Patentblatt 2021/22**

(73) Patentinhaber: **Industrielack AG**
**8855 Wangen SZ (CH)**

(72) Erfinder:
• **BRAND, Jörg**
 **8855 Wangen (CH)**
• **GEISEL, Hans Georg**
 **8855 Wangen (CH)**
• **RAISCH, Stephanie**
 **8855 Wangen (CH)**

(74) Vertreter: **Schmauder & Partner AG**
**Patent- & Markenanwälte VSP**
**Zwängiweg 7**
**8038 Zürich (CH)**

(56) Entgegenhaltungen:
**EP-A1- 3 357 587       EP-B2- 2 342 279**
**WO-A1-2010/036911**

• **DAIKIN INDUSTRIES: "POLYFLON PTFE D-310", TECHNICAL INFORMATION, 27 October 2015 (2015-10-27), XP055506916, Retrieved from the Internet <URL:https://www.daikinchem.de/downloads/Polyflon_PTFE_Dispersions/Technical_Data_Sheet_POLYFLON_PTFE_D-310_(2015).pdf> [retrieved on 20180913]**

(52) Gemeinsame Patentklassifikation (CPC): (Forts.)

C-Sets
**C09D 127/18, C08K 3/013, C08L 27/18,
C08L 79/08;
C09D 127/18, C08L 27/18**

**Beschreibung**

Technisches Gebiet

Die vorliegende Erfindung betrifft eine PTFE-Antihaftbeschichtung mit verbesserten Antihaft-Eigenschaften nach intensivem Abrieb, einen Gegenstand mit einer derartigen Antihaft-Beschichtung , ein Verfahren zu deren Herstellung sowie deren Verwendung bei der Herstellung von Koch-, Brat- und Küchengeräten oder anderen Anwendungen, bei denen ein Antihaft-Effekt und hohe Abriebbeständigkeit gefordert sind.

Stand der Technik

Organische Fluorpolymerbeschichtungen zeigen aufgrund ihrer geringen Oberflächenenergie sehr gute Antihaft-Eigenschaften und aufgrund der hohen C-F Bindungsenergien hohe Temperaturbeständigkeiten. Insbesondere als Antihaft-Beschichtungen für Küchengeräte finden solche Beschichtungen breite Anwendung.

Antihaft-Beschichtungen aus Fluorpolymeren werden meist in mehreren Schichten auf das Substrat aufgetragen. Mehrschichtige Fluorpolymerbeschichtungen umfassen generell eine Haftvermittler-Schicht und eine Deckschicht, und optional eine oder mehrere Mittelschichten.

Mehrlagige Antihaft-Beschichtungen aus Fluorpolymeren sind seit vielen Jahren bekannt. Die Haftvermittler-Schicht solcher Systeme besteht typischerweise aus einem oder mehreren hitzebeständigen organischen Bindeharzen und einem oder mehreren Fluorpolymeren zusammen mit verschiedenen Pigmenten und Füllstoffen. Die Mittelschicht beinhaltet hauptsächlich Fluorpolymere, geringe Anteile an Effektpigmenten, Pigmenten, Füllstoffen und Filmbildehilfsmitteln, wohingegen die Deckschicht fast ausschliesslich aus Fluorpolymeren, insbesondere aus hochmolekularem PTFE, welches durch Emulsionspolymerisation von TFE aus wässriger Dispersion gewonnen wurde, alleine oder aus hochmolekularem PTFE , welches durch Emulsionspolymerisation von TFE aus wässriger Dispersion gewonnen wurde, mit geringen Anteilen an schmelzverarbeitbarem Fluorpolymer, besteht, um möglichst gute Antihaft-Eigenschaften der Deckschicht zu gewährleisten.

Zur Verbesserung der Abriebfestigkeit mehrschichtiger PTFE-Antihaftbeschichtungen werden meist harte anorganische Füllstoffe verwendet.

So beschreibt z.B. US 5,250,356 ein mehrschichtiges System, umfassend eine durch feinteiliges Aluminiumoxid verstärkte Haftvermittler-Schicht bestehend aus PTFE, PFA und PAI, einer Zwischenschicht bestehend aus PTFE, PFA und feinteiligem Aluminiumoxid sowie einer Deckschicht aus reinem PTFE.

EP 1016466 beschreibt eine mehrschichtige keramisch verstärkte Antihaftbeschichtung, bei der die Basisschicht keramische Partikel enthält, die aber so gross sind, dass sie aus der Deckschicht herausragen und dadurch die abrasive Belastung von der Deckschicht fernhalten.

US 6,761,964 beschreibt eine mehrschichtige Antihaftbeschichtung umfassend eine Basisschicht aus Fluorpolymeren, Haftvermittler-Polymeren und grossen anorganischen Hartstoffpartikeln, die in der Basisschicht verankert sind und in die darauf folgende Zwischenschicht hineinragen, welche aus Fluorpolymeren und kleineren keramischen Füllstoffpartikeln besteht, und einer Deckschicht, die ausschliesslich aus Fluorpolymeren besteht.

EP 2001949 beschreibt eine dreischichtige Antihaftbeschichtung in der die Basisschicht und die Deckschicht frei von keramischen Partikeln >10 $\mu$m sind und die Mittelschicht mindestens 3Gew% keramische Partikel >10 $\mu$m und Fluorpolymere enthält.

Werden solche Systeme abgerieben, so zeigen diese Systeme auf den abgeriebenen Oberflächen meist schlechte Antihaft-Eigenschaften, da die Füllstofffreien Deckschichten aufgrund der niedrigen Deckschicht-Trockenfilmschichtdicken schnell abgerieben werden und somit die mit Füllstoffen versetzten Mittelschichten freigelegt werden, die schlechtere Antihaft-Eigenschaften zeigen, als die meist ausschliesslich aus Fluorpolymeren bestehenden Deckschichten.

EP 2342279 und WO 2010/063911 beschreiben eine Fluorpolymer-Beschichtungszusammensetzung mit verbesserter Abriebbeständigkeit, die auf eine mit Aluminiumoxid verstärkten Haftvermittler-Schicht oder zumindest eine Mittelschicht aufgebracht wird. Die beschriebene ungefüllte Deckschicht besteht aus Acrylaten (Filmbildehilfsmitteln), Cer-Ethylhexanoat (Katalysator für die Verbrennung des Filmbildehilfsmittels) und einer Fluorpolymer-Zusammmensetzung.

Die Fluorpolymerzusammensetzung besteht hierbei aus 30-96%Gew hochmolekularem PTFE (bezogen auf den gesamten festen Gehalt an Fluorpolymeren der Beschichtung) in Form einer wässrigen Dispersion mit einem zahlengemittelten Molekulargewicht (Mn) von mindestens 500'000, wobei das hochmolekulare PTFE ein modifizierendes Co-Monomer in einem Gehalt von weniger als 1% beinhaltet und die Fluorpolymerzusammensetzung ferner niedermolekulares PTFE in Form einer wässrigen Dispersion in einem Gehalt von 4-70%Gew (bezogen auf den gesamten festen Gehalt an Fluorpolymeren der Beschichtung) mit einem ersten Schmelzpunkt von 335 °C oder weniger und ein schmelzverarbeitbares Fluorpolymer in Form wässriger Dispersion enthält. Ein solches modifiziertes PTFE ist in folgendem Dokument beschrieben:
Daikin Industries: "POLYFLON PTFE D-310", Technical information (2015-10-27), Gefunden im Internet unter URL:

https://www.daikinchem.de/downloads/Polyflon_PTFE_Dispersions/Technical_Data_Sheet_POLYFLON_PTFE_D-310_(2015).pdf [gefunden am 2018-09-13].

Das offenbarte hochmolekulare PTFE und das erwähnte niedermolekulare PTFE werden hierbei durch Emulsionspolymerisation von TFE erhalten.

Die verbesserten Abriebwerte dieser Beschichtung werden auf das Vorhandensein von niedermolekularem PTFE und schmelzverarbeitbarem Fluorpolymer (z.B. PFA) zurückgeführt.

Für die Basisschicht wurden Schichtstärken um 8 $\mu$m und für die Deckschicht wurden Schichtstärken um 25 $\mu$m offenbart.

WO 2012/092414 beschreibt wässrige Dispersionen von nicht-schmelzverarbeitbaren Fluorpolymeren und Beschichtungen aus diesen Dispersionen. Die aus den beschriebenen PTFE-Dispersionen hergestellten Beschichtungen zeigen durch erhöhten Gehalt an nichtionischem Netzmittel und 1-10%Gew wasserlösliche Erdalkalimetallen oder 0.1-1% kolloidales Silica eine erhöhte kritische Schichtdicke bevor es zur Bildung von Rissen in der Schicht kommt (CCT; critical cracking thickness).

Mehrschichtige Antihaftbeschichtungen besitzen meist Gesamt-Trockenfilmschichtstärken von maximal 45 $\mu$m (Haftvermittlerschicht: 14-18 $\mu$m, Mittelschicht 12-14 $\mu$m, Deckschicht 10-13 $\mu$m). Ungefüllte wässrige PTFE-Beschichtungszusammensetzungen (der Deckschicht) zeigen meist kritische Trockenfilm-Schichtdicken von ca. 12-14 $\mu$m bevor sich Risse bilden.

Eine verbesserte Abriebbeständigkeit kann u.a. dadurch erreicht werden, dass die Trockenfilmschichtdicke der Mittelschicht und der Deckschicht erhöht wird. Ohne Zusatz von Füllstoffen bilden sich jedoch bei hohen Schichtstärken Risse nach dem Einbrennen der Beschichtung.

Die Bildung von Rissen bei hohen Mittel- und Deckschicht-Trockenfilmschichtdicken lassen sich durch den Zusatz von Füllstoffen minimieren bzw. es können höhere kritische Trockenfilm-Schichtdicken erzielt werden. Die zugesetzten Füllstoffe zeigen jedoch einen negativen Einfluss auf die Antihaft-Eigenschaften der abgeriebenen Beschichtung.

Der Zusatz von Filmbildehilfsmitteln wie Acrylaten kann die kritische Trockenfilmschichtstärke ebenfalls etwas erhöhen, jedoch verbrennen die zugesetzten Acrylate beim Einbrennvorgang der Beschichtung und es müssen Katalysatoren zugesetzt werden um eine möglichst vollständige Verbrennung der Acrylate zu erreichen. Unverbrannte Acrylatrückstände beeinflussen die Antihaft-Eigenschaften ebenfalls negativ.

Darstellung der Erfindung

Eine Aufgabe der Erfindung ist es demnach, ein verbessertes Verfahren zum Aufbringen einer Antihaftbeschichtung bereitzustellen. Gelöst wird diese Aufgabe durch das im Anspruch 1 definierte Verfahren.

Eine erfindungsgemäss herstellbare Antihaftbeschichtung umfasst zumindest eine auf eine Oberfläche des Artikels angebrachte Haftvermittlerschicht und eine über der Haftvermittlerschicht angeordnete Deckschicht, wobei die Haftvermittlerschicht eine Trockenfilmschichtdicke von 5 bis 25 $\mu$m aufweist und wobei die Deckschicht eine Trockenfilmschichtdicke von 10 bis 65 $\mu$m aufweist. Die Deckschicht enthält 95 bis 100 Gew.-% PTFE und gegebenenfalls bis zu 5 Gew.-% Pigmente bezogen auf den gesamten Feststoffgehalt der Deckschicht und ist frei von schmelzverarbeitbaren Fluorpolymeren wobei das enthaltene PTFE zwischen 1 und 100 Gew.-% eines hochmolekularen modifizierten PTFE, welches < 1 Gew.-% Perfluorpropylvinylether (PPVE) als modifizierendes Co-Monomer enthält und durch Emulsionspolymerisation gewonnen wurde, enthält. Der etwaige Restanteil von bis zu 99 Gew.-% besteht im Wesentlichen aus unmodifiziertem hochmolekularem PTFE.

Die Herstellung von modifiziertem PTFE mittels Suspensionspolymerisation ist grundsätzlich bekannt und wird insbesondere zur Bildung von körnigem PTFE mit besonders hohem Molekulargewicht eingesetzt. Eine damit hergestellte Antihaftbeschichtung ist in der nachveröffentlichten EP 3357581 beschrieben.

Die Herstellung von wässrigen Dispersionen von modifiziertem hochmolekularem PTFE mittels Emulsionspolymerisation ist ebenfalls bekannt und liefert sehr feinteilige wässrige Dispersionen, die im Gegensatz zu modifizierten PTFE Pulvern, die mittels Suspensionspolymerisation gewonnen wurden, leichter in eine wässrige Beschichtungszusammensetzung eingearbeitet werden können und praktisch kein Absetzverhalten zeigen.

Durch die hohen rissfreien Deckschicht-Trockenfilmschichtstärken lassen sich gegenüber dem Stand der Technik deutlich bessere Abriebfestigkeiten erzielen und die Antihaft-Eigenschaften der abgeriebenen Schicht sind deutlich langlebiger, da in der Deckschicht neben PTFE keine Füllstoffe enthalten sind, die nach dem Abrieb der Deckschicht freigelegt werden können und somit die Antihafteigenschaften verschlechtern würden. Dementsprechend zeichnet sich die erfindungsgemässe Antihaftbeschichtung durch einen guten Antihaft-Effekt in Kombination mit einer guten Abriebbeständigkeit aus.

Beim erfindungsgemässen Verfahren wird die zu bildende Haftvermittlerschicht in flüssiger Form als erste wässrige Dispersion auf die Oberfläche des Gegenstandes aufgebracht und anschliessend für 5 bis 15 Minuten bei 60 bis 110°C getrocknet. Danach wird die Deckschicht in Form einer zweiten wässrigen Dispersion auf die vorgetrocknete Haftvermittlerschicht aufgebracht, und anschliessend werden die Schichten durch Trocknung und Versinterung bzw. Aufschmelzen bei 410 bis 430°C miteinander und mit der Oberfläche des Gegenstandes verbunden. Die zweite wässrige Dispersion enthält ein Dispergat aus 95 bis 100 Gew.-% PTFE und gegebenenfalls bis zu 5 Gew.-% Pigmente bezogen auf das gesamte Dispergat und ist frei von schmelzverarbeitbaren Fluorpolymeren, wobei das enthaltene PTFE zwischen 1 und 100 Gew.-% eines hochmolekularen modifizierten PTFE, welches < 1 Gew.-% Perfluorpropylvinylether (PPVE) als modifizierendes Co-Monomer enthält und durch Emulsionspolymerisation gewonnen wurde, enthält. Der etwaige Restanteil von bis zu 99 Gew.-% besteht im Wesentlichen aus unmodifiziertem hochmolekularem PTFE. Die zweite wässrige Dispersion ist frei von schmelzverarbeitbaren Fluorpolymeren und frei von niedermolekularem PTFE.

Überraschenderweise hat sich gezeigt, dass sich mit dem erfindungsgemässen Verfahren selbst hohe Deckschicht-Trockenfilmschichtstärken von bis zu 65 $\mu$m rissfrei in einem einzigen Beschichtungsvorgang erhalten lassen.

Die erfindungsgemäss hergestellte Antihaftbeschichtung ist vorteilhafterweise für Oberflächenanwendungen verwendbar, bei denen hohe Abriebfestigkeiten und gute Antihafteigenschaften gefordert werden.

Es ist vorgesehen, einen Artikel, insbesondere ein Kochgeschirr oder anderer Haushalts- und Gebrauchsgegenstand, mit einer Oberfläche auszustatten, die mit einer erfindungsgemäss hergestellten Antihaftbeschichtung versehen ist.

Die erfindungsgemäss hergestellte Antihaftbeschichtung weist demnach eine Schichtenfolge "Gegenstand-Haftvermittlerschicht-Deckschicht" auf. Optional kann zwischen der Haftvermittlerschicht und der Deckschicht eine Zwischenschicht aufgetragen werden.

Vorteilhafte Ausgestaltungen der Erfindung sind nachfolgend beschrieben und in den abhängigen Ansprüchen definiert.

Gemäss einer bevorzugten Ausgestaltung (Anspruch 3) weist die Deckschicht eine Trockenfilmschichtdicke von 30 bis 42 $\mu$m, insbesondere von 35 bis 40 $\mu$m auf.

Gemäss einer weiteren vorteilhaften Ausgestaltung (Anspruch 4) beträgt der Gehalt von PTFE in der Deckschicht 99 bis 99.5 Gew.-%. Der Gehalt an Pigmenten beträgt dementsprechend 1 bis 0.5 Gew.-% und setzt sich beispielsweise aus ungefähr 2 Teilen Effektpigmenten (Glimmer) und und ungefähr 1 Teil Russpigment zusammen.

In gewissen Ausführungsformen macht der Anteil des hochmolekularen modifizierten PTFE in der Deckschicht bis zu 99 Gew.-%, insbesondere bis zu 95 Gew.-%, insbesondere bis zu 75 Gew.-% aus. Insbesondere ist es vorteilhaft (Anspruch 5), wenn der Anteil des hochmolekularen modifizierten PTFE in der Deckschicht 2 bis 50 Gew.-%, vorzugsweise 4 bis 6 Gew.-%, insbesondere ungefähr 5.5 Gew.-% des gesamten PTFE in der Deckschicht ausmacht.

Vorteilhaft ist es überdies (Anspruch 6), dass das hochmolekulare modifizierte PTFE eine mittlere Teilchengrösse von 150 bis 250 nm (nach DIN ISO 13321), insbesondere von ungefähr 200 nm besitzt.

Gemäss einer vorteilhaften Ausgestaltung (Anspruch 2) ist die Deckschicht frei von Acrylaten. Unverbrannte Acrylatrückstände beeinflussen die Antihaft-Eigenschaften negativ und sind demnach unerwünscht.

Die Beschaffenheit geeigneter Haftvermittlerschichten ist an sich bekannt. Im vorliegenden Zusammenhang hat es sich als vorteilhaft erwiesen (Anspruch 7), dass die Haftvermittlerschicht im Wesentlichen aus hochtemperaturbeständigen Bindeharzen, Fluorpolymeren, Pigmenten und Füllstoffen besteht.

Grundsätzlich können die Bindeharze aus einer ganzen Reihe von bekannten Substanzen wie insbesondere PES (Polyethersulfone), PAI (Polyamidimide), PEK (Polyetherketon), PEEK (Polyetheretherketon), PPS (Polyphenylensulfide), PI (Polyimide), LCP (liquid crystal polymers) und Silikonharze oder Mischungen davon ausgewählt werden. Gemäss einer vorteilhaften Ausgestaltung (Anspruch 8) sind die Bindeharze aus der aus PES und PAI bestehenden Gruppe ausgewählt.

Bevorzugt ist es überdies (Anspruch 9), dass die Haftvermittlerschicht eine Trockenfilmschichtdicke von 10 bis 18 $\mu$m aufweist.

Kurze Beschreibung der Figuren

Ausführungsbeispiele der Erfindung werden nachfolgend anhand der Zeichnungen näher beschrieben, dabei zeigen:

Fig. 1        einen Schichtaufbau einer erfindungsgemäss hergestellten Antihaftbeschichtung, als schematische Schnittdarstellung;

Fig. 2 - 5     ein Ausführungsbeispiel, jeweils nach einer bestimmten Abriebzeit (links) sowie nach zusätzlichem Milchtest und anschliessender Reinigung (rechts), nämlich: Abriebzeit 45 min (Fig. 2), 90 min (Fig. 3), 180 min (Fig.

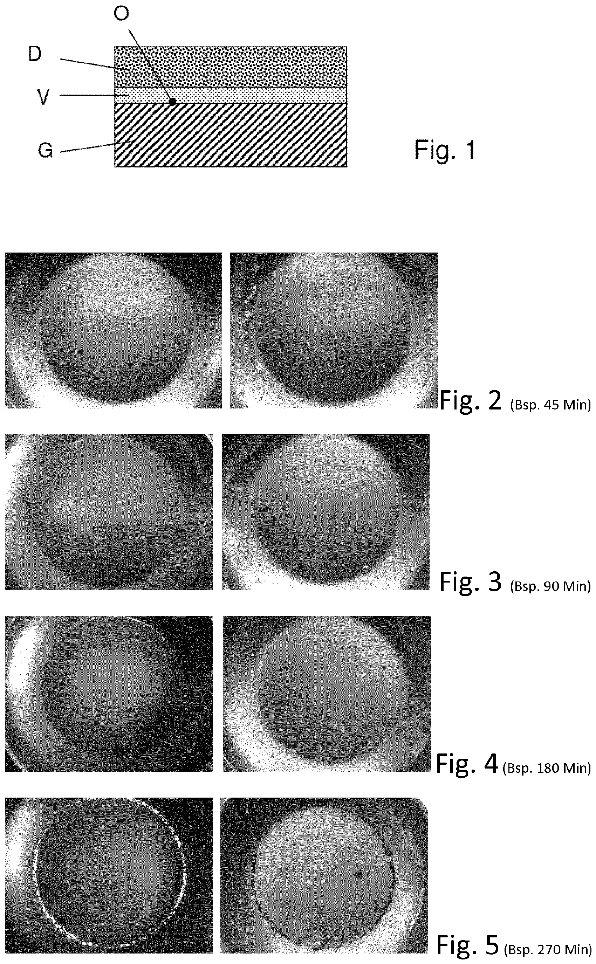

4) und 270 min (Fig. 5);

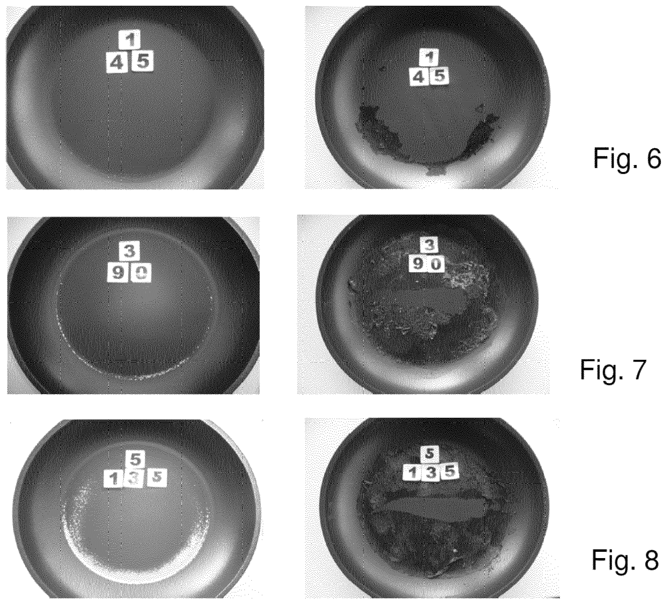

Fig. 6 - 8  ein Vergleichsbeispiel, jeweils nach einer bestimmten Abriebzeit (links) sowie nach zusätzlichem Milchtest und anschliessender Reinigung (rechts), nämlich: Abriebzeit 45 min (Fig. 6), 90 min (Fig. 7) und 135 min (Fig. 8).

## Wege zur Ausführung der Erfindung

Die in der Figur 1 dargestellte Antihaftbeschichtung für einen Artikel G, bei dem es sich beispielsweise um ein Kochgeschirr, insbesondere um eine Bratpfanne handelt, weist eine auf einer Oberfläche O des Artikels angebrachte Haftvermittlerschicht V sowie eine über der Haftvermittlerschicht angeordnete Deckschicht D auf.

### Beispiel

Geprüft wurde eine Antihaftbeschichtung bestehend aus einer Deckschicht mit einer Trockenfilmschichtstärke von 35 bis 40 $\mu$m und einer Basisschicht mit einer Trockenfilmschichtstärke von ca.15 $\mu$m. Die Deckschicht enthält in diesem Ausführungsbeispiel ca. 99.3%Gew PTFE bezogen auf den gesamten Feststoffgehalt der Deckschicht, davon sind ca. 5.5%Gew hochmolekulares modifiziertes PTFE, welches < 1 Gew.-% Perfluorpropylvinylether (PPVE) als modifizierendes Co-Monomer enthält und durch Emulsionspolymerisation gewonnen wurde und eine mittlere Teilchengrösse von ca. 200 nm hat. Zusätzlich sind ca. 0.4%Gew Effektpigmente (Glimmer) und ca. 0.2%Gew Russpigment bezogen auf den gesamten Feststoffgehalt der Deckschicht enthalten.

Die Haftvermittlerschicht besteht im Ausführungsbeispiel aus ca. 32.5%Gew Aluminiumoxid, 18.4%Gew Polyamidimid, 13.7%Gew Siliciumcarbid, 27.1%Gew PTFE, 5.5%Gew PFA, 1.9%Gew kolloidalem Siliciumdioxid und 0.9%Gew Russpigment bezogen auf den gesamten Feststoffgehalt der Haftvermittlerschicht. Die Haftvermittlerschicht wird aus wässriger Dispersion auf ein sandgestrahltes Substrat (z.B. eine Bratpfanne) aufgebracht und anschliessend während 5 Min bei 100 °C vorgetrocknet. Danach wird die Deckschicht aus wässriger Dispersion auf die vorgetrocknete Haftvermittlerschicht aufgebracht und während 10 min bei 420 °C eingebrannt.

### Eigenschaften der Beschichtung:

Die eingebrannte erfindungsgemässe Deckschicht wurde mit 40-facher Vergrösserung mit einem Stereomikroskop auf Risse hin untersucht. Dabei konnte verifiziert werden, dass die Deckschicht rissfrei war.

Die Abriebbeständigkeit des beschichteten Gegenstandes wurde wie folgt geprüft:

Die beschichtete Pfanne wird mit einer Mischung bestehend aus Edelstahlkugeln ø 4 mm, Korund (ALODUR EK- P20) und Wasser befüllt und auf einem Kreisschüttler KS 501 digital (Schüttelhub: 30 mm) befestigt und eine bestimmte Zeit bei 300 Umdrehungen/Minute geschüttelt. Die verwendeten Mengen an Edelstahlkugeln, Korund und Wasser berechnen sich wie folgt:

Der Durchmesser des Pfannenbodens innen wird ausgemessen und der ermittelte Wert in cm mit dem Faktor 0.394 multipliziert. Als Ergebnis erhält man den Pfannenbodendurchmesser innen in Zoll.

$$f = (\text{Pfannenbodendurchmesser innen Zoll})^2/10$$

Mit Hilfe des Faktors $f$ wird eine entsprechende Menge an Edelstahlkugeln, Korund und Wasser berechnet:

| | |
|---|---|
| Edelstahlkugeln ø 4 mm | 175 Gramm ▪ $f$ |
| ALODUR EK- P20 | 18 Gramm ▪ $f$ |
| Wasser | 20 Gramm ▪ $f$ |

Nach einer bestimmten Schüttelzeit wird die Pfanne optisch dahingehend beurteilt, ob das Aluminiumsubstrat zu sehen ist. Anschliessend die abgeriebene Pfanne auf 200 ± 5 °C erhitzt und ein Pfannkuchen bestehend aus 400 g Milch (3.0% - 4.0% Fett), 200 g Weizenmehl, 150 g Eier, 4 g Salz gebacken und beurteilt, wie sich der gebackene Pfannkuchen aus der Pfanne entfernen lässt.

Um die Antihaft-Eigenschaften weiter zu überprüfen wurde anschliessend Milch eingebrannt, bis diese eine braunschwarze Farbe zeigt und zu rauchen beginnt. Die eingebrannte Milch wurde dann mit Hilfe eines Wasserstrahls aus der Pfanne entfernt und beurteilt, ob Rückstände der eingebrannten Milch in der Pfanne verbleiben. Die Ergebnisse wurden für verschiedene Abriebzeiten fotografisch festgehalten.

Die Figuren 2 bis 5 zeigen die erhaltenen Ergebnisse des mit der erfindungsgemässen Antihaftbeschichtung versehenen Gegenstandes.

Tabelle 1 zeigt die Ergebnisse des Pfannkuchentests des erfindungsgemässen Gegenstandes nach Abrieb und des Vergleichsbeispiels nach Abrieb.

*Vergleichsbeispiel*

Das Vergleichsbeispiel ist eine dreischichtige Antihaftbeschichtung, bei der die Haftvermittlerschicht eine Trockenfilmschichtstärke von ca. 18 $\mu$m aufweist, die Zwischenschicht eine Trockenfilmschichtstärke von ca. 15 $\mu$m aufweist und die Deckschicht eine Schichtstärke von ca. 12 $\mu$m aufweist.

Die Haftvermittlerschicht des Vergleichsbeispiels besteht aus ca. 29.9%Gew Aluminiumoxid, 24.5%Gew Polyamidimid, 12.7%Gew Siliciumcarbid, 25.2%Gew PTFE, 5.1%Gew PFA, 1.8%Gew kolloidalem Siliciumdioxid und 0.8%Gew Russpigment bezogen auf den gesamten Feststoffgehalt der Haftvermittlerschicht.

Die Zwischenschicht des Vergleichsbeispiels besteht aus ca. 5.2%Gew Acrylat, 0.1%Gew Cer-Ethylhexanoat, 2.0%Gew Aluminiumoxid, 12.3%Gew Siliciumcarbid, 76.7%Gew PTFE, 1.4%Gew PFA, 1.9%Gew Effektpigment (Glimmer) und 0.4%Gew Russpigment bezogen auf den gesamten Feststoffgehalt der Zwischenschicht.

Die Deckschicht des Vergleichsbeispiels besteht aus ca. 3.9%Gew Acrylat, 0.1%Gew Cer-Ethylhexanoat, 2.2%Gew Aluminiumoxid, 91.4%Gew PTFE, 2.2%Gew Effektpigment (Glimmer) und 0.2%Gew Russpigment bezogen auf den gesamten Feststoffgehalt der Deckschicht.

Die Figuren 6 bis 8 zeigen die Prüfungsergebnisse des Vergleichsbeispiels.

**Tabelle 1:** Ergebnisse des Pfannkuchentests des erfindungsgemässen Beispiels und des Vergleichsbeispiels, jeweils nach Abrieb.

| Abriebzeit | Erfindungsgemässes Beispiel | Vergleichsbeispiel |
|---|---|---|
| 45 Minuten | Pfannkuchen fällt nach Umdrehen der Pfanne heraus | Pfannkuchen fällt nach Umdrehen der Pfanne heraus |
| 90 Minuten | Pfannkuchen fällt nach Umdrehen der Pfanne heraus | Pfannkuchen fällt nach Umdrehen der Pfanne und klopfen heraus |
| 135 Minuten | Pfannkuchen fällt nach Umdrehen der Pfanne heraus | Pfannkuchen fällt nach Umdrehen der Pfanne und Klopfen heraus |
| 180 Minuten | Pfannkuchen fällt nach Umdrehen der Pfanne heraus | nicht durchgeführt |
| 270 Minuten | Pfannkuchen fällt nach Umdrehen der Pfanne heraus | nicht durchgeführt |

**Patentansprüche**

1. Verfahren zum Aufbringen einer Antihaftbeschichtung

   auf einen Artikel,
   wobei die Antihaftbeschichtung zumindest eine auf eine Oberfläche des Artikels angebrachte Haftvermittlerschicht (V) und eine über der Haftvermittlerschicht angeordnete Deckschicht (D) aufweist, wobei die Haftvermittlerschicht eine Trockenfilmschichtdicke von 5 bis 25 $\mu$m aufweist, und wobei die Deckschicht eine Trockenfilmschichtdicke von 10 bis 65 $\mu$m aufweist, wobei die Deckschicht 95 bis 100 Gew.-% PTFE und gegebenenfalls bis zu 5 Gew.-% Pigmente bezogen auf den gesamten Feststoffgehalt der Deckschicht enthält und frei von schmelzverarbeitbaren Fluorpolymeren ist, und das enthaltene PTFE zwischen 1 und 100 Gew.-% eines hochmolekularen modifizierten PTFE, welches < 1 Gew.-% Perfluorpropylvinylether (PPVE) als modifizierendes Co-Monomer enthält und durch Emulsionspolymerisation gewonnen wurde, enthält,
   wobei die zu bildende Haftvermittlerschicht in flüssiger Form als erste wässrige Dispersion auf die Oberfläche des Gegenstandes aufgebracht und anschliessend für 5 bis 15 Minuten bei 60 bis 110°C getrocknet wird, und wobei anschliessend die Deckschicht in Form einer zweiten wässrigen Dispersion auf die vorgetrocknete Haftvermittlerschicht aufgebracht wird und die Schichten durch anschliessende Trocknung und Versinterung bzw. Aufschmelzen bei 410 bis 430°C miteinander und mit der Oberfläche des Gegenstandes verbunden werden, **dadurch gekennzeichnet, dass** die zweite wässrige Dispersion frei von schmelzverarbeitbaren Fluorpolymeren und frei von niedermolekularem PTFE ist.

**2.** Verfahren nach Anspruch 1, wobei die zweite wässrige Dispersion frei von Acrylaten ist.

**3.** Verfahren nach Anspruch 1 oder 2, wobei die Deckschicht bis zu einer Trockenfilmschichtdicke von 30 bis 42 μm aufgebracht wird.

**4.** Verfahren nach einem der Ansprüche 1 bis 3, wobei der Gehalt von PTFE in der Deckschicht 99 bis 99.5 Gew.-% beträgt.

**5.** Verfahren nach einem der Ansprüche 1 bis 4, wobei der Anteil des hochmolekularen modifizierten PTFE in der zweiten wässrigen Dispersion 2 bis 50 Gew.-%, vorzugsweise 4 bis 6 Gew.-%, insbesondere ungefähr 5.5 Gew.-% des gesamten PTFE in der zweiten wässrigen Dispersion ausmacht.

**6.** Verfahren nach einem der Ansprüche 1 bis 5, wobei das hochmolekulare modifizierte PTFE in der zweiten wässrigen Dispersion eine mittlere Teilchengrösse nach DIN ISO 13321 vor 150 bis 250 nm, insbesondere von ungefähr 200 nm, besitzt.

**7.** Verfahren nach einem der Ansprüche 1 bis 6, **dadurch gekennzeichnet, dass** die Haftvermittlerschicht im Wesentlichen aus hochtemperaturbeständigen Bindeharzen, Fluorpolymeren, Pigmenten und Füllstoffen besteht.

**8.** Verfahren nach Anspruch 7, **dadurch gekennzeichnet, dass** die Bindeharze aus der aus PES (Polyethersulfonen) und PAI (Polyamidimiden) bestehenden Gruppe ausgewählt sind.

**9.** Verfahren nach einem der Ansprüche 1 bis 8, wobei die Haftvermittlerschicht bis zu einer Trockenfilmschichtdicke von 10 bis 18 μm aufgebracht wird.

**Claims**

**1.** A method for applying a non-stick coating onto an article, wherein the non-stick coating comprises at least one adhesion-promoting layer (V) arranged on a surface of the article and a covering layer (D) arranged above the adhesion-promoting layer, wherein the adhesion-promoting layer has a dry film thickness of 5 to 25 μm, and wherein the covering layer has a dry film thickness of 10 to 65 μm, wherein the covering layer contains, related to the total solid material content of the covering layer, 95 to 100 wt.-% PTFE and optionally up to 5 wt.-% pigments, and is free of melt-processable fluoropolymers, and that the PTFE contained therein contains between 1 and 100 wt.-% of a high molecular weight modified PTFE, which contains < 1 wt.-% of perfluoropropylvinyl ether (PPVE) as a modifying comonomer and was obtained by emulsion polymerization, wherein the adhesion-promoting layer to be formed is applied on the surface of the article in liquid form as a first aqueous dispersion and then dried for 5 to 15 minutes at 60 to 110°C, and wherein subsequently the covering layer is applied on the pre-dried adhesion-promoting layer as a second aqueous dispersion and the layers are bonded to each other and with the surface of the article by subsequent drying and sintering or melting at 410 to 430°C, **characterized in that** the second aqueous dispersion is free of melt-processable fluoropolymers and free of low molecular weight PTFE.

**2.** The method according to claim 1, wherein the second aqueous dispersion is free of acrylates.

**3.** The method according to claim 1 or 2, wherein the covering layer is applied up to a dry film thickness of 30 to 42 μm.

**4.** The method according to claim 1 to 3, wherein the content of PTFE in the covering layer is 99 to 99.5 wt.-%.

**5.** The method according to one of claims 1 to 4, wherein the proportion of the high molecular weight modified PTFE in the second aqueous dispersion is 2 to 50 wt.-%, preferably 4 to 6 wt.-%, particularly about 5.5 wt.-% of the total PTFE in the second aqueous dispersion.

**6.** The method according to one of claims 1 to 5, wherein the high molecular weight modified PTFE in the second aqueous dispersion has an average particle size according to DIN ISO 13321 of 150 to 250 nm, particularly of about 200 nm.

**7.** The method according to one of claims 1 to 6, **characterized in that** the adhesion-promoting layer essentially consists of high-temperature-resistant binding resins, fluoropolymers, pigments and fillers.

8. The method according to claim 7, **characterized in that** the binding resins are selected from the group consisting of PES (polyether sulfones) and PAI (polyamideimides).

9. The method according to one of claims 1 to 8, wherein the adhesion-promoting layer is applied up to a dry film thickness of 10 to 18 $\mu$m.

**Revendications**

1. Procédé d'application d'un revêtement antiadhésif, sur un article, le revêtement antiadhésif comprenant au moins une couche de promoteur d'adhérence (V) appliquée sur une surface de l'article et une couche de couvrement (D) disposée au-dessus de la couche de promoteur d'adhérence, la couche de promoteur d'adhérence ayant une épaisseur de couche de film sec de 5 à 25 $\mu$m, et la couche de couvrement ayant une épaisseur de couche de film sec de 10 à 65 $\mu$m, la couche de couvrement comprenant 95 à 100 % en poids de PTFE et éventuellement jusqu'à 5 % en poids de pigments par rapport à la teneur totale en matières solides de la couche de couvrement et étant exempt de fluoropolymères traitables par fusion, dans lequel le PTFE contenu contient entre 1 et 100 % en poids d'un PTFE modifié de poids moléculaire élevé qui contient < 1 % en poids d'éther perfluoropropylvinylique (PPVE) comme co-monomère modificateur et qui a été obtenu par polymérisation en émulsion, dans lequel la couche de promoteur d'adhérence à former est appliquée sous forme liquide d'une première dispersion aqueuse sur la surface de l'objet et étant ensuite séchée pendant 5 à 15 minutes à 60 à 110°C, et dans lequel la couche de couvrement est ensuite appliquée sous forme d'une deuxième dispersion aqueuse sur la couche de promoteur d'adhérence pré-séchée, et les couches sont liées entre elles et à la surface de l'objet par séchage et frittage ou fusion ultérieurs entre 410 et 430°C, **caractérisé en ce que** la deuxième dispersion aqueuse est exempte de fluoropolymères traitables par fusion et exempte de PTFE à faible poids moléculaire.

2. Procédé selon la revendication 1, dans lequel la deuxième dispersion aqueuse est exempte d'acrylates.

3. Procédé selon la revendication 1 ou 2, dans lequel la couche de couvrement est appliquée jusqu'à une épaisseur de film sec de 30 à 42 $\mu$m.

4. Procédé selon l'une des revendications 1 à 3, dans lequel la teneur de PTFE dans la couche de couvrement est de 99 à 99.5 % en poids.

5. Procédé selon l'une des revendications 1 à 4, dans lequel la proportion du PTFE modifié de poids moléculaire élevé dans la deuxième dispersion aqueuse est de 2 à 50 % en poids, de préférence de 4 à 6 % en poids, en particulier d'environ 5.5 % en poids du PTFE total dans la deuxième dispersion aqueuse.

6. Procédé selon l'une des revendications 1 à 5, dans lequel la PTFE modifié de poids moléculaire élevé dans la deuxième dispersion aqueuse présente une taille moyenne de particules selon la norme DIN ISO 13321 de 150 à 250 nm, en particulier d'environ 200 nm.

7. Procédé selon l'une des revendications 1 à 6, **caractérisé en ce que** la couche de promoteur d'adhérence est essentiellement constituée de résines liantes résistant aux hautes températures, de polymères fluorés, de pigments et de charges.

8. Procédé selon la revendication 7, **caractérisé en ce que** les résines liantes sont choisies dans le groupe constitué des PES (polyéthersulfones) et des PAI (polyamideimides).

9. Procédé selon l'une des revendications 1 à 8, dans lequel la couche de promoteur d'adhérence est appliquée jusqu'à une épaisseur de couche de film sec de 10 à 18 $\mu$m.

Fig. 1

Fig. 2 (Bsp. 45 Min)

Fig. 3 (Bsp. 90 Min)

Fig. 4 (Bsp. 180 Min)

Fig. 5 (Bsp. 270 Min)

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5250356 A
- EP 1016466 A
- US 6761964 B
- EP 2001949 A
- EP 2342279 A
- WO 2010063911 A
- WO 2012092414 A
- EP 3357581 A

**In der Beschreibung aufgeführte Nicht-Patentliteratur**

- **DAIKIN INDUSTRIES.** POLYFLON PTFE D-310. *Technical information,* 27. Oktober 2015, https://www.daikinchem.de/downloads/Polyflon_PTFE_Dispersions/Techni-<SHY>cal_Data_Sheet_POLYFLON_PTFE_D-310_(2015).pdf